# EUROPEAN PATENT SPECIFICATION

(11) **EP 3 124 806 B1**
(45) Date of publication and mention of the grant of the patent: **23.10.2019**
(21) Application number: 15425057.5
(22) Date of filing: 29.07.2015
(51) Int. Cl.: F16B 33/00, F16B 39/24, B62K 25/02

(54) **ANTI-ROTATION SYSTEM FOR SECURE FIXING OF A HUB MOTOR TO A PAIR OF FORK-ENDS OF A BICYCLE FRAME**
ANTIROTATIONSSYSTEM ZUR SICHEREN BEFESTIGUNG EINES NABENMOTORS AN EINEM GABELENDENPAAR EINES FAHRRADRAHMENS
SYSTÈME ANTI-ROTATION POUR FIXATION SÛRE D'UN MOTEUR DE MOYEU À UNE PAIRE DE PATTES DE CADRE DE BICYCLETTE

(43) Date of publication of application: 01.02.2017
(73) Proprietor: ASKOLL EVA S.r.l. a Socio Unico, 36031 Dueville (Vicenza) (IT)
(72) Inventor: Marioni, Elio, I-36031 Dueville (Vicenza) (IT)
(74) Representative: Botti, Mario

(56) References cited:
- EP-A1- 2 599 704
- WO-A1-2009/041820
- US-A- 625 199

## Description

### Field of application

The present invention relates to an anti-rotation washer, of the type used for fixing a hub motor to a bicycle frame. In particular, the invention relates to an anti-rotation system defined by the washer, by the hub support shaft and by the mounting fork-ends integrated in the frame or able to be associated therewith.

The invention may be usefully employed in the technological sector of electric mobility, in particular in the sector of pedal-assist bicycles.

### Prior art

During the last few years electric bicycles or pedal-assist bicycles have become increasingly widespread on account of the growing sensitivity to environmental issues and the recent technological developments in particular in the sector of rechargeable batteries.

A solution commonly used in the design of electric bicycles consists of the so-called hub motor, which incorporates inside a wheel hub the electric motor and the respective reduction unit. The device, which is generally mounted on the front wheel, is stably supported by a shaft which is fixed with respect to the frame and is able to generate a relative torque which facilitates or promotes rotation of the wheel associated with it.

The hub motor advantageously includes the entire power train unit, which therefore requires, for operation thereof, only an electrical connection to a battery unit mounted on the frame and to a possible control interface situated on the handlebars.

Precisely because of their extremely compact nature and ease of assembly, hub motors have become widespread on the market also in the form of independent modules intended for after-sales motorization of conventional bicycles.

However, fixing of the hub support shaft to the bicycle frame must satisfy mechanical requirements which are more stringent than those of the wheel hub fixing system of a conventional bicycle. The classic wheel mounting system, which envisages the simple tightening of the lateral nuts against the hub support end-forks using a lever or spanner, would in fact not be suitable for transferring to the frame the high torques generated by the electric motor.

In order to fasten stably the support shaft an anti-rotation washer is therefore arranged in between, said washer having a locking tooth which is inserted into the slot of the end-forks, i.e. into the recess inside which the shaft itself is inserted. The anti-rotation washer is pressed into position by a locking nut tightened with a predetermined torque, typically 40 Nm.

The aforementioned system, while substantially meeting the needs of the sector, nevertheless has a major drawback.

The safety of the anti-rotation system is in fact ensured when the latter is correctly assembled, but may be drastically affected in the event of over-tightening or insufficient tightening with respect to the predetermined torque prescribed by the manufacturer.

If an excessive torque is applied, during tightening the frictional torque generated at the nut/washer interface may exceed the frictional torque between anti-rotation washer and fork-end, with the latter being mechanically stressed such that it tends to open. Said stress may result in yielding of the material of the fork-end with the consequent creation of a tensioned state which is dangerous for the mechanical strength of the entire application.

If instead an insufficient, or even zero, torque is applied during operating conditions the entire reaction torque of the motor is transmitted, via the flat surfaces of the shaft and the washer tooth, onto the fork-end which, when the yield strength of the material from which it is made is exceeded, deforms and opens.

In both cases, therefore, there is the risk that the fork-end may be deformed or may break during use, resulting in separation of the wheel during riding and cyclist falling off and injuring him/herself.

The risk of this happening is particularly great when the hub motor is mounted on the front fork, where the fork-ends are structurally weaker.

It should be noted that, even though the prescribed tightening torque may be ensured during initial assembly, this may not be the case during subsequent assembly operations. In the event of a puncture, for example, it is quite likely that a cyclist, who does not possess a torque spanner and is unaware of the abovementioned risks, will reassemble the wheel hub in a makeshift manner, applying a tightening torque which may also be substantially less than the tightening torque prescribed by the manufacturer.

The technical problem of the present invention is therefore that of devising an anti-rotation washer, together with a respective anti-rotation system, which allows secure fixing of the hub motor to the fork-ends of the frame, even in the event of tightening torques which differ substantially from the optimum torque.

Documents WO 2009/041820 A1 and US 625,199 A disclose anti-rotation systems with a washer known in the art. The former represents the preamble of appended Claim 1. Further, document EP 2 599 704 Al discloses a bicycle axle assembly.

### Summary of the invention

The aforementioned technical problem is solved by an anti-rotation system according to claim 1, comprising an anti-rotation washer for fixing a hub-motor support shaft to a fork-end of a bicycle frame, comprising: a substantially flat washer body which has, formed therein, a shaped hole for engagement in a rotatably fixed manner onto said support shaft and which has two opposite sides, i.e. an outer side and an inner side, the former being provided to be pressed against by a tightening nut and the latter being provided to abut against a side surface of the fork-end, in a position mounted on the frame; and a stop element integral with the washer body and designed so as to abut against a contact surface integral with the frame, preventing rotation of the anti-rotation washer when in the mounted position on the frame; said contact surface being external with respect to a slot of the fork-end designed to receive to the support shaft.

Said anti-rotation washer is therefore configured so as to transmit any torques onto the frame via the abutment contact between stop element and contact surface, without however forcing the fork-end on the inside of the slot, as occurs with the anti-rotation washers of the prior art.

The contact surface is thus preferably chosen in the region of a frame section which, while being close to the axis of the wheel, has a structural strength greater than that of the single fork-end prong subjected to torsional stress.

For example, in the case of the front wheel, the contact surface may be defined at the front in the region of the point for mounting the fork-end on the stem or sleeve of the fork, or also at the front on the outer surface of the front eyelet which is generally designed for mounting the mudguard support arm.

The structural problems described with reference to the prior art are thus completely overcome by the anti-rotation washer according to the present invention.

The stop element extends protruding beyond the plane defined by the inner side of the washer body, such as to interfere directly with an outer portion of the fork-end or with a structure of the frame substantially coplanar with the fork-end itself.

The protruding stop element extends from a certain distance from the longitudinal axis of the support shaft which can be engaged with the washer, namely from the axis of rotation of the mounted wheel. In particular, this distance is chosen so as not to interfere with the inside of the prongs of the fork-end with which it is associated, but only with an outer surface of the latter or with another frame portion.

In particular, in order to engage with a front fork-end of standard dimensions, the stop element must extend at a radial distance of not less than 10 mm (preferably not less than 15 mm) from the aforementioned longitudinal axis.

The stop element of the anti-rotation washer is defined by an end of a peripheral lip.

Such a configuration of the stop element ensures a good mechanical strength of the said element in the direction of any reaction forces at the interface with the contact surface.

The peripheral lip is configured so as to fit, when the anti-rotation washer is in the mounted position, around an outer profile of the respective fork-end.

The peripheral lip thus prevents, even in the event of insufficient tightening, sliding of the support shaft outside of the fork-end and also ensures correct positioning of the anti-rotation washer during assembly. The peripheral lip may in this case extend following an arc of a circumference, preferably subtended by a central angle greater than 180°.

Said peripheral lip may be separated from the inner side by a groove configured to seat a raised edge of the side surface of the fork-end.

This measure ensures a further correspondence in shape between fork-end and anti-rotation washer.

The present invention relates to an anti-rotation system comprising two fork-ends provided with slots, a support shaft which can be inserted inside said slots and at least one anti-rotation washer of the abovementioned type which can be pressed by means of a nut against a side surface of one of said fork-ends.

This system comprises preferably two anti-rotation washers which are a mirror image of each other, respectively intended to be pressed against a right-hand fork-end and a left-hand fork-end by means of a corresponding number of nuts.

The fork-ends may be of the known type or may be specifically configured to mate with the anti-rotation washer, as described above.

The fork-ends may be independent parts which may be rigidly joined together with a bicycle frame or may be integrally formed with said frame.

The contact surface against which the stop element of the washer abuts may be defined by an outer radial protrusion of the fork-end or by an element of the frame in the vicinity of the said fork-end.

For example, it may be defined by a mounting eyelet for the support arm of a mudguard or a luggage rack.

Further characteristic features and advantages of the present invention will emerge from the description, provided hereinbelow, of a preferred example of embodiment provided by way of a non-limiting example with reference to the accompanying drawings.

### Brief description of the drawings

Figure 1 shows a perspective view of an electric bicycle provided with a front hub motor fixed to the fork with an anti-rotation system comprising anti-rotation washers according to the present invention;

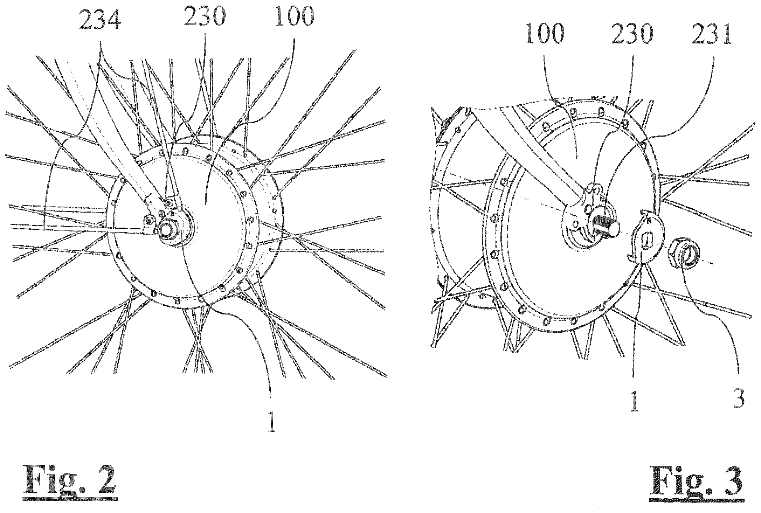

Figure 2 shows a perspective view of the anti-rotation system applied to the bicycle of Figure 1, from the right-hand fork-end side;
Figure 3 shows an exploded view of the detail of Figure 2;

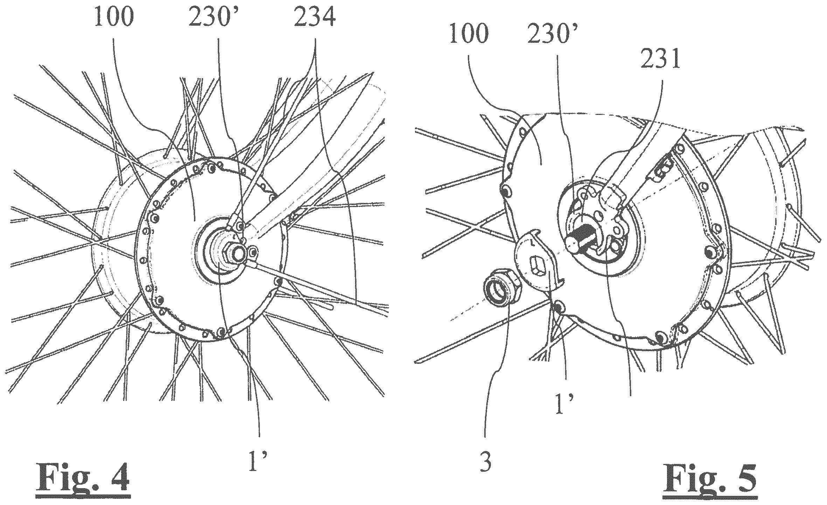

Figure 4 shows a perspective view of the anti-rotation system applied to the bicycle of Figure 1, from the left-hand fork-end side;
Figure 5 shows an exploded view of the detail of Figure 4;

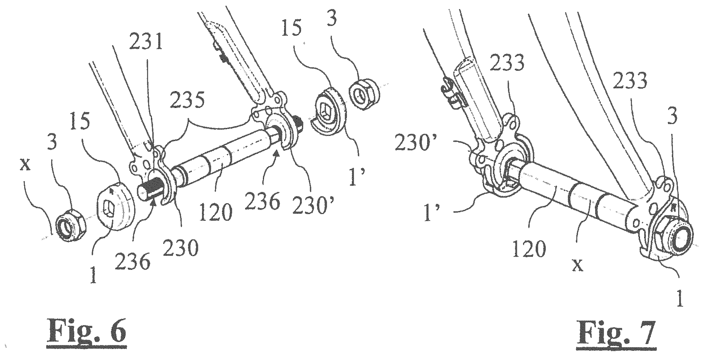

Figure 6 shows a perspective view, in the exploded condition, of the anti-rotation system according to Figure 1, with the hub motor and the respective wheel omitted for greater clarity;
Figure 7 shows a perspective view, in the assembled condition, of the anti-rotation system according to Figure 1, with the hub motor and the respective wheel omitted for greater clarity;

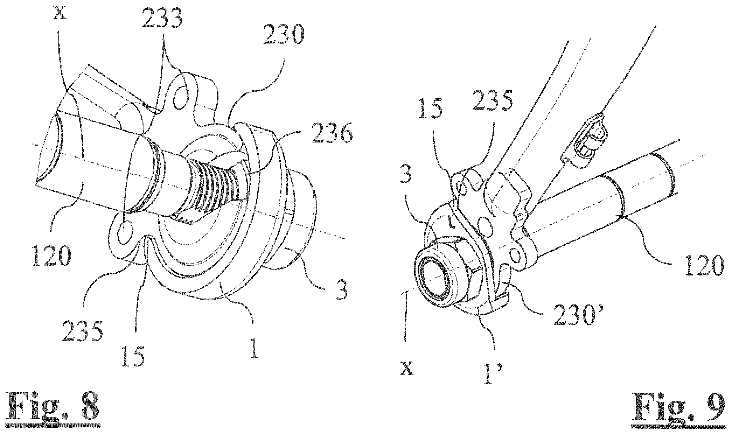

Figure 8 shows a perspective view of the anti-rotation system according to Figure 1 from the right-hand fork-end side, with the hub motor and the respective wheel omitted for greater clarity;
Figure 9 shows a perspective view of the anti-rotation system according to Figure 1 from the left-hand fork-end side, with the hub motor and the respective wheel omitted for greater clarity;
Figure 10 shows a rear view of the right-hand anti-rotation washer according to the present invention;
Figure 11 shows a view of the right-hand anti-rotation washer cross-sectioned along the axis A-A of Figure 10;
Figure 12 shows a front view of the right-hand anti-rotation washer according to the present invention;
Figure 13 shows a rear view of the left-hand anti-rotation washer according to the present invention;
Figure 14 shows a view of the left-hand anti-rotation washer cross-sectioned along the axis A-A of Figure 13;
Figure 15 shows a front view of the left-hand anti-rotation washer according to the present invention.

### Detailed description

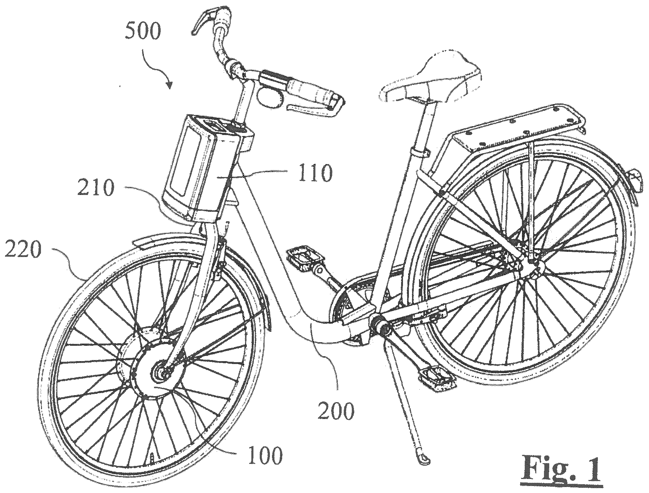

With reference to the attached figure 1, 500 denotes generically an electric bicycle, in particular of the pedal-assist type. The electric bicycle 500 is fitted with a hub motor 100 which supports a front wheel 220 and is fastened to the front fork 210 of a frame 200. The hub motor 100, which is connected to a battery 110, is able to produce a torque which causes said front wheel 220 to rotate with respect to said frame 200.

The front fork 210 has two stems which have, mounted on their ends, a corresponding number of fork-ends, i.e. a right-hand fork-end 230 and left-hand fork-end 230'.

The two fork-ends 230, 230' seat a support shaft or pin 120 which supports the hub motor and is locked in position by means of two anti-rotation washers 1, 1', i.e. right-hand washer and left-hand washer, which are pressed against the corresponding fork-ends 230, 230' by means of a corresponding number of nuts 3.

The two fork-ends 230, 230' and the two anti-rotation washers 1, 1' are an identical mirror image of each other and their corresponding portions are indicated in the remainder of the present description by the same reference numbers.

The support shaft 120, the fork-ends 230, 230', the anti-rotation washers 1, 1' and the nuts 3 define an ant-rotation system which locks the hub motor 100 in a stable position on the frame 200, preventing deformation of the fork-ends 230, 230' due to an excessive or insufficient tightening torque.

It should be noted that the single anti-rotation washers 1, 1' may be made so as to match the form of the fork-ends and the hub motors which are present on the market and may be sold singly so that it is possible to make safe the frame/hub motor coupling of existing electric bicycles.

The anti-rotation washers 1, 1' and the hub motor 100 with the respective support shaft 120 may also be made so as to be compatible with the fork-ends of the bicycles present on the market and be sold for post-sale motorization of conventional bicycles.

The anti-rotation washers 1, 1' may also be sold with the specific fork-ends 230, 230' configured for them, so as to allow the existing fork-ends of a bicycle frame to be replaced if necessary.

Furthermore, the entire anti-rotation system may be provided on an electric bicycle with specific fork-ends 230, 230' integral with the frame 200.

The fork-ends 230, 230' have a substantially planar configuration with a foot for mounting on the respective fork stem 210 and a head with a circular shape at the bottom of which a recess or slot 236 is formed for introduction of the support shaft 120.

It should be noted that this slot 236 has, in a manner known per se, two parallel faces inside which two flat surfaces of the support shaft 120 stably engage.

At the point where the mounting foot is connected to the head of the fork-ends 230, 230' two protuberances extend on both sides of the outer profile, said protuberances also being flat and defining a corresponding number of mounting eyelets 233 for support arms 234 of a front mudguard.

The main portions of the fork-ends 230, 230' have, on their outer side, a flat side surface 231 which is slightly inset with respect to a circular edge flush with the rest of the part.

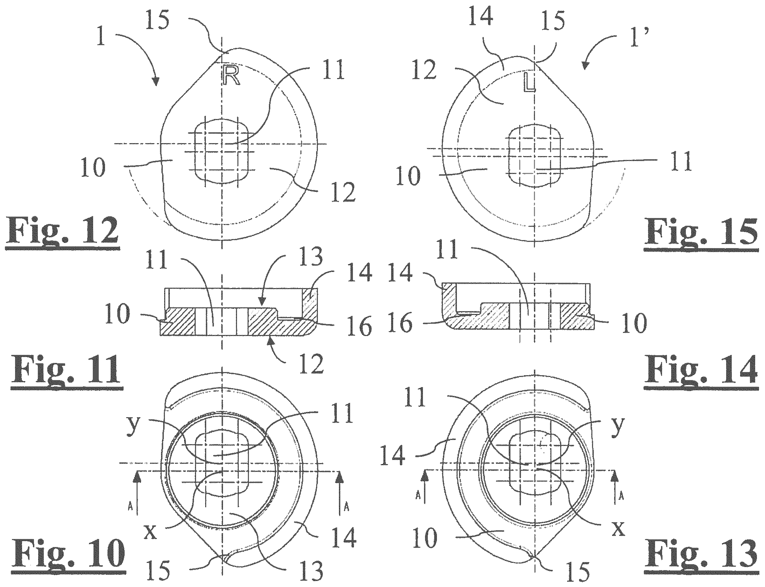

The anti-rotation washers 1, 1', which are shown individually in the attached Figures 10-15, may also have a circular shape which substantially matches the head of the fork-ends 230, 230' with which they are associated.

The anti-rotation washes comprise a substantially flat washer body 10 and a rigid peripheral lip 14.

An inner side 13 of the washer body 10 is designed to abut against the side surface 231 of the head of the fork-end 230, 230'; on the other hand, the outer side 12 is intended to receive instead the nut 3 arranged against it.

The washer body has a hole 11 configured to match the flat-face profile of the end portions of the support shaft 120. In the embodiment shown here the hole 11, as well as the end portions of the shaft 120, are slightly eccentric with respect to a longitudinal axis x of the said shaft coinciding with the axis of rotation of the front wheel 220. This eccentricity ensures greater stability of engagement of the support shaft 120 on the fork-ends 230, 230'.

The peripheral lip 14 extends protruding at right angles from the inner side 13 of the washer body 10, namely towards the fork-end 230, 230'. This lip, which has a uniform thickness, follows an arc of a circle subtended by a central angle slightly greater than 180° and thus extends along only a portion of the periphery of the washer 1, 1'.

It should be noted that the peripheral lip 14 is configured so as to fit around the free profile of the head of the fork-ends 230, 230', thus defining a stable form-fit between the two parts.

A groove 16 is formed between the peripheral lip 14 and the more central portion of the inner side 13 inside which the hole 11 is present, said groove defining an annular channel which is shaped to match the raised edge of the head of the fork-ends 230, 230'.

In the portion which is not surrounded by the peripheral lip 14, the path of the otherwise cylindrical edge of the washer body 10 is interrupted so as to surround the circular portion of the inner side 13 in which there is no groove 16.

When positioned on the respective fork-end 230, 230', the anti-rotation washer 1, 1' therefore mates perfectly with the form of the latter, with the peripheral lip 14 around the profile and the inner side 13 situated opposite the side surface 231.

Assembly of the anti-rotation system envisages firstly inserting the support shaft 120 inside the respective slots 236 of the fork-ends 230, 230'. The two anti-rotation washers 1, 1' are then also mounted on the support shaft 120 until they fit in the aforementioned engaged position on the associated fork-ends 230, 230'. Finally, the two nuts 3 are tightened and press the anti-rotation washers 1, 1' against the respective fork-ends 230, 230'.

It should be noted that the orientation of the hole 11 specifically defines the angular position of the anti-rotation washer 1, 1' which is mounted on the support shaft 120, with respect to the corresponding fork-end 230, 230'. The peripheral lip 14 is configured so that, in the aforementioned angular assembly position, one end thereof defining the stop element 15 abuts against - or in any case is situated very close to - a stable contact surface 235 defined by the outer profile of the top fixing eyelet 233 of the fork-end 230, 230'.

The contact between stop element 15 and contact surface 235 thus allows any torque to be transmitted onto the frame without forcing the single fork-end prong.

Obviously the person skilled in the art, in order to meet any specific requirements, may make numerous modifications and variations to the method and device described above, all of which moreover are contained in the scope of protection of the invention, as defined by the following claims.

## Claims

1. Anti-rotation system (1; 1') comprising two fork-ends (230; 230') of a bicycle frame (200) each provided with a respective slot (236), a hub-motor support shaft (120) inserted inside said slots (236), and at least one anti-rotation washer (1; 1') for fixing said support shaft (120) to one of said fork ends (230; 230'), said anti-rotation washer (1; 1') being pressed by means of a nut (3) against a side surface (231) of the fork-end (230; 230'), and comprising:
a substantially flat washer body (10) which has, formed therein, a shaped hole (11) for engagement in a rotatably fixed manner onto said support shaft (120) and which has two opposite sides, i.e. an outer side (12) and an inner side (13), the former being pressed against by the locking nut (2) and the latter abutting against a side surface of the fork-end (230; 230'), in a position mounted on the frame (200);
and a stop element (15) integral with the washer body (10) and designed so as to abut against a contact surface (235) integral with the frame (200), preventing rotation of the anti-rotation washer (1; 1') when in a position mounted on the frame (200);
wherein said anti-rotation washer is configured such that said contact surface (235) is external with respect to the slot (236) of the fork-end (230; 230') that receives the support shaft (120), said stop element (15) extending protruding beyond the plane defined by the inner side (13) of the washer body (10);
**characterized in that** said stop element (15) is defined by an end of a peripheral lip (14), wherein said peripheral lip (14) fits, when the anti-rotation washer (1; 1') is in the mounted position, around an outer profile of the respective fork-end (230; 230').

2. Anti-rotation system (1; 1') according to Claim 1, wherein said stop element (15) extends from a radial distance of not less than 10 mm from a longitudinal axis (x) of the support shaft (120) which can be engaged with the washer (1; 1').

3. Anti-rotation system (1; 1') according to Claim 1, wherein said peripheral lip (14) extends along an arc of a circumference.

4. Anti-rotation system (1; 1') according to Claim 3, wherein said arc of a circumference is subtended by a central angle greater than 180°.

5. Anti-rotation system (1; 1') according to one of the previous Claims, wherein said peripheral lip (14) is separated from the inner side (13) by a groove (16) configured to seat a raised edge (232) of the side surface (231) of the fork-end (230; 230').

6. Anti-rotation system (1; 1') according to Claim 1, where said contact surface (235) is defined by an outer radial protrusion of the fork-end (230; 230') or by an element of the frame (200) in the vicinity of the fork-end (230; 230').

7. Anti-rotation system (1; 1') according to Claim 6, where said contact surface (235) is externally defined by a mounting eyelet (233) for the support arm (234) of a mudguard or a luggage rack.

8. Anti-rotation system (1; 1') according to one of the previous Claims, comprising at least two anti-rotation washers (1; 1') which are a mirror image of each other, respectively intended to be pressed against a right-hand fork-end (230) and a left-hand fork-end (230').

## Patentansprüche

1. Drehverhinderungssystem (1; 1'), das zwei Gabelenden (230; 230') eines Fahrradrahmens (200), wovon jedes mit einem entsprechenden Schlitz (236) versehen ist, eine Nabenmotor-Stützwelle (120), die in die Schlitze (236) eingesetzt ist, und wenigstens eine Drehverhinderungsscheibe (1; 1') zum Befestigen der Stützwelle (120) an einem der Gabelenden (230; 230') umfasst, wobei die Drehverhinderungsscheibe (1; 1') mittels einer Mutter (3) gegen eine Seitenfläche (231) des Gabelendes (230; 230') gepresst wird und wobei das System Folgendes umfasst:
einen im Wesentlichen flachen Scheibenkörper (10), in dem ein geformtes Loch (11) für einen rotationsfesten Eingriff auf der Stützwelle (120) ausgebildet ist, und der zwei gegenüberliegende Seiten, d.h. eine äußere Seite (12) und eine innere Seite (13) aufweist, wobei in einer Position, in der die Scheibe an dem Rahmen (200) montiert ist, erstere gegen die Sicherungsmutter (2) gepresst wird und letztere an einer seitlichen Oberfläche des Gabelendes (230; 230') anliegt;
und ein Stoppelement (15) einteilig mit dem Scheibenkörper (10) und so entworfen ist, dass es an einer Kontaktfläche (235) anliegt, die einteilig mit dem Rahmen (200) ist, um eine Rotation der Drehverhinderungsscheibe (1; 1') zu verhindern, wenn es in einer Position an dem Rahmen (200) montiert ist;
wobei die Drehverhinderungsscheibe so konfiguriert ist, dass die Kontaktfläche (235) in Bezug auf den Schlitz (236) des Gabelendes (230; 230'), der die Stützwelle (120) aufnimmt, außen liegt, und wobei sich das Stoppelement (15) so erstreckt, dass es über die Ebene, die durch die Innenseite (13) des Scheibenkörpers (10) definiert ist, vorsteht;
**dadurch gekennzeichnet, dass** das Stoppelement (15) durch ein Ende einer Umfangslippe (14) definiert ist, wobei die Umfangslippe (14) dann, wenn die Drehverhinderungsscheibe (1; 1') in der montierten Position ist, um ein Außenprofil des entsprechenden Gabelendes (230; 230') passt.

2. Drehverhinderungssystem (1; 1') nach Anspruch 1, wobei sich das Stoppelement (15) von einem radialen Abstand von nicht weniger als 10 mm von einer Längsachse (x) der Stützwelle (120), die mit der Scheibe (1; 1') in Eingriff gelangen kann, erstreckt.

3. Drehverhinderungssystem (1; 1') nach Anspruch 1, wobei sich die Umfangslippe (14) entlang eines Umfangsbogens erstreckt.

4. Drehverhinderungssystem (1; 1') nach Anspruch 3, wobei der Umfangsbogen in einem Mittelpunktswinkel geschnitten wird, der größer als 180° ist.

5. Drehverhinderungssystem (1; 1') nach einem der vorhergehenden Ansprüche, wobei die Umfangslippe (14) von der Innenseite (13) durch eine Rille (16) getrennt ist, die so konfiguriert ist, dass eine erhöhte Kante (232) der seitlichen Oberfläche (231) des Gabelendes (230; 230') aufsitzt.

6. Drehverhinderungssystem (1; 1') nach Anspruch 1, wobei die Kontaktfläche (235) durch einen äußeren radialen Vorsprung des Gabelendes (230; 230') oder durch ein Element des Rahmens (200) in der Nähe des Gabelendes (230; 230') definiert ist.

7. Drehverhinderungssystem (1; 1') nach Anspruch 6, wobei die Kontaktfläche (235) außen durch eine Montageöse (233) für den Haltearm (234) eines Schutzblechs oder eines Gepäckträgers definiert ist.

8. Drehverhinderungssystem (1; 1') nach einem der vorhergehenden Ansprüche, das wenigstens zwei Drehverhinderungsscheiben (1; 1') umfasst, die spiegelbildlich zueinander liegen, die jeweils so vorgesehen sind, dass sie gegen ein Gabelende (230) auf der rechten Seite und gegen ein Gabelende (230') auf der linken Seite gepresst werden.

## Revendications

1. Système anti-rotation (1 ; 1') comprenant deux extrémités de fourche (230 ; 230') d'un cadre de bicyclette (200) munies chacune d'une fente (236), d'un arbre support de moteur moyeu (120) inséré dans lesdites fentes (236), et au moins une rondelle anti-rotation (1 ; 1') pour fixer ledit arbre support (120) à l'une desdites extrémités de fourche (230 ; 230'), ladite rondelle anti-rotation (1 ; 1') étant serrée au moyen d'un écrou (3) contre une surface latérale (231) de l'extrémité de fourche (230 ; 230'), et comprenant :
un corps de rondelle sensiblement plat (10) qui comporte, formé dedans, un trou profilé (11) destiné à s'engager de manière fixe en rotation sur ledit arbre support (120), et qui présente deux faces opposées, c'est-à-dire une face extérieure (12) et une face intérieure (13), la première étant appuyée contre par le contre-écrou (2) et la seconde contre une surface latérale de l'extrémité de fourche (230 ; 230'), dans une position montée sur le cadre (200) ;
et un élément de blocage (15) faisant partie intégrante du corps de rondelle (10) et conçu pour venir en butée contre une surface de contact (235) faisant partie intégrante du cadre (200), empêchant la rotation de la rondelle anti-rotation (1 ; 1') quand elle est en position montée sur le cadre (200) ;
ladite rondelle anti-rotation étant configurée de telle sorte que ladite surface de contact (235) est externe par rapport à la fente (236) de l'extrémité de fourche (230 ; 230') qui reçoit l'arbre support (120), ledit élément de blocage (15) dépassant du plan défini par la face intérieure (13) du corps (10) de rondelle ;
**caractérisé en ce que** ledit élément de blocage (15) est défini par une extrémité d'une lèvre périphérique (14), ladite lèvre périphérique (14) s'ajustant, lorsque la rondelle anti-rotation (1 ; 1') est en position montée, autour d'un profil extérieur de l'extrémité de fourche respective (230 ; 230').

2. Système anti-rotation (1 ; 1') selon la revendication 1, dans lequel ledit élément de blocage (15) s'étend à une distance radiale d'au moins 10 mm d'un axe longitudinal (x) de l'arbre support (120) qui peut être engagé avec la rondelle (1 ; 1').

3. Système anti-rotation (1 ; 1') selon la revendication 1, dans lequel ladite lèvre périphérique (14) s'étend sur un arc de circonférence.

4. Système anti-rotation (1 ; 1') selon la revendication 3, dans lequel ledit arc de circonférence est sous-tendu par un angle central supérieur à 180°.

5. Système anti-rotation (1 ; 1') selon l'une des revendications précédentes, dans lequel ladite lèvre périphérique (14) est séparée de la face intérieure (13) par une rainure (16) configurée pour recevoir un bord relevé (232) de la surface latérale (231) de l'extrémité de fourche (230 ; 230').

6. Système anti-rotation (1 ; 1') selon la revendication 1, dans lequel ladite surface de contact (235) est définie par une saillie radiale extérieure de l'extrémité de fourche (230 ; 230') ou par un élément du cadre (200) au voisinage de l'extrémité de fourche (230 ; 230').

7. Système anti-rotation (1 ; 1') selon la revendication 6, dans lequel ladite surface de contact (235) est définie extérieurement par un oeillet de montage (233) pour le bras support (234) d'un garde-boue ou d'un porte-bagages.

8. Système anti-rotation (1 ; 1') selon l'une des revendications précédentes, comprenant au moins deux rondelles anti-rotation (1 ; 1') qui sont une image miroir l'une de l'autre, destinées à être pressées respectivement contre une extrémité de fourche droite (230) et une extrémité de fourche gauche (230').
